# EUROPÄISCHE PATENTSCHRIFT

(11) **EP 2 132 453 B1**
(45) Veröffentlichungstag und Bekanntmachung des Hinweises auf die Patenterteilung: **02.11.2011**
(21) Anmeldenummer: 08708420.8
(22) Anmeldetag: 30.01.2008
(51) Int. Cl.: F16D 7/04, B23B 45/16

(54) **GETRIEBEVORRICHTUNG**
GEARBOX DEVICE
SYSTEME D'ENGRENAGE

(30) Priorität: 02.03.2007 DE 102007010182
(43) Veröffentlichungstag der Anmeldung: 16.12.2009
(73) Patentinhaber: Robert Bosch GmbH, 70442 Stuttgart (DE)
(72) Erfinder: ULLRICH, Andre, 70794 Filderstadt-Bernhausen (DE); BERNHARDT, Thomas, 72631 Aichtal-Groetzingen (DE); HERR, Tobias, 70569 Stuttgart (DE)
(86) Internationale Anmeldenummer: PCT/EP2008/051105
(87) Internationale Veröffentlichungsnummer: WO 2008/107237

(56) Entgegenhaltungen:
- EP-A- 1 702 723
- WO-A-2004/024398
- DE-A1- 4 102 014
- DE-C1- 3 832 202
- NL-A- 6 516 131

## Beschreibung

### Stand der Technik

Die Erfindung geht aus von einer Getriebevorrichtung nach dem Oberbegriff des Anspruchs 1, wie bereits bekannt aus dem Dokument WO 2004/024 398 A1.

Es ist bereits eine Getriebevorrichtung bekannt, die ein Abtriebsmittel und eine auf dem Abtriebsmittel angeordnete Überlastkupplung umfasst. Die Überlastkupplung weist dabei ein Federelement, eine Zahnradeinheit und ein Rastelement auf.

### Vorteile der Erfindung

Die Erfindung geht aus von einer Getriebevorrichtung, insbesondere für einen Bohr- und/oder Meißelhammer, mit einem Abtriebsmittel und einer auf dem Abtriebsmittel angeordneten Überlastkupplung, die ein Federelement, eine Zahnradeinheit und ein Rastelement aufweist.

Es wird vorgeschlagen, dass das Federelement entlang einer Kraftflussrichtung des Abtriebsmittels auf dem Abtriebsmittel vor der Zahnradeinheit und dem Rastelement angeordnet ist. In diesem Zusammenhang soll unter "entlang einer Kraftflussrichtung" insbesondere eine Richtung verstanden werden, in welche eine Kraft entlang des Abtriebsmittels auf ein Werkzeug übertragen wird und die entlang einer Längsachse des Abtriebsmittels in Richtung einer Werkzeugaufnahme verläuft. Unter einer "Überlastkupplung" soll dabei insbesondere eine Kupplung verstanden werden, die ein maximal zu übertragendes Drehmoment auf ein Werkzeug bzw. über das Werkzeug auf ein zu bearbeitendes Objekt festlegt. Die Zahnradeinheit ist vorzugsweise zu einer Übertragung eines Drehmoments auf das Abtriebsmittel vorgesehen. Bei einer erfindungsgemäßen Ausgestaltung kann eine besonders kurze und kompakte Getriebevorrichtung erreicht werden, die insbesondere durch die Anordnung der Zahnradeinheit nach dem Federelement entlang der Kraftflussrichtung einen zusätzlichen Bauraum, der beispielsweise zu einer Schaltung zwischen unterschiedlichen Getriebestufen zu einer Übertragung unterschiedlicher Drehmomente vorgesehen ist, bereitstellen kann. Vorzugsweise wird das Abtriebsmittel von einem rotierenden Abtriebsmittel, wie insbesondere einem Hammerrohr eines Bohr- und/oder Meißelhammers, gebildet.

Ist die Zahnradeinheit entlang der Kraftflussrichtung des Abtriebsmittels auf dem Abtriebsmittel vor dem Rastelement angeordnet, kann eine konstruktiv einfache und Bauteile sparende Überlastkupplung vorteilhaft erreicht werden, indem die Zahnradeinheit in Kraftflussrichtung gegen das Rastelement abgestützt werden kann.

Weiterhin wird vorgeschlagen, dass die Zahnradeinheit zumindest zwei Drehmomentübertragungsbereiche zu einer Übertragung unterschiedlicher Antriebsgeschwindigkeiten auf das Abtriebsmittel aufweist. Hierdurch kann eine besonders Platz sparende Anordnung der Getriebevorrichtung erreicht werden, indem die Überlastkupplung neben einer Überlastfunktion zugleich zu einer Übertragung unterschiedlicher Drehmomente auf das Hammerrohr vorgesehen ist. Vorzugsweise sind die beiden Drehmomentübertragungsbereiche jeweils von einem Zahnrad gebildet.

Es wird ferner vorgeschlagen, dass die Zahnradeinheit zumindest ein Kraftübertragungselement aufweist, das zu einer Kopplung an das Rastelement vorgesehen ist, wodurch eine zumindest teilweise drehfeste und insbesondere direkte Anordnung bzw. Kopplung der Zahnradeinheit mit dem Rastelement erreicht werden kann. Weitere Bauteile, Bauraum, Montageaufwand und Kosten können vorteilhaft eingespart werden, wenn die Zahnradeinheit zusammen mit dem Kraftübertragungselement einstückig ausgebildet ist.

Des Weiteren wird vorgeschlagen, dass das Kraftübertragungselement ein trapezartiges Stirnprofil aufweist, wodurch eine gleichmäßige Verteilung einer Kraft entlang eines Trapezschenkels erreicht werden kann. Vorzugsweise weist die Zahnradeinheit mehrere trapezartige Kraftübertragungselemente auf, wobei die einzelnen Kraftübertragungselemente in einer Umfangsrichtung vorteilhafterweise gleichmäßig beabstandet zueinander angeordnet sind. Prinzipiell sind jedoch auch weitere, dem Fachmann als sinnvoll erscheinende Stirnprofile in einer alternativen Ausgestaltung der Erfindung jederzeit denkbar. Ist zudem das Rastelement drehfest mit dem Abtriebsmittel verbunden, kann eine konstruktiv einfache Drehmomentübertragung von der Zahnradeinheit über das Rastelement auf das Abtriebsmittel vorteilhaft erreicht werden. Ferner können in einer weiteren Ausgestaltung der Erfindung weitere Bauteile, Bauraum, Montageaufwand und Kosten eingespart werden, wenn das Rastelement mit dem Abtriebsmittel einstückig ausgebildet ist.

In einer weiteren Ausgestaltung der Erfindung wird vorgeschlagen, dass die Zahnradeinheit von einem Sinterbauteil gebildet ist, wodurch eine besonders kostengünstige Herstellung der Zahnradeinheit erreicht werden kann. Insbesondere kann hierbei auf eine aufwendige und teure Nachbearbeitung der durch einen Sinterprozess hergestellten Zahnradeinheit vorteilhaft verzichtet werden. Grundsätzlich ist es auch denkbar, die Zahnradeinheit in einem Fließpressverfahren oder weiteren, dem Fachmann als sinnvoll erscheinenden Produktionsverfahren herzustellen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: eine Handwerkzeugmaschine mit einer erfindungsgemäßen Getriebevorrichtung,
- Fig. 2: die Getriebevorrichtung mit einer Überlastkupplung in einer schematischen Seitenansicht und
- Fig. 3: eine Zahnradeinheit der Überlastkupplung in einer perspektivischen Ansicht.

### Beschreibung des Ausführungsbeispiels

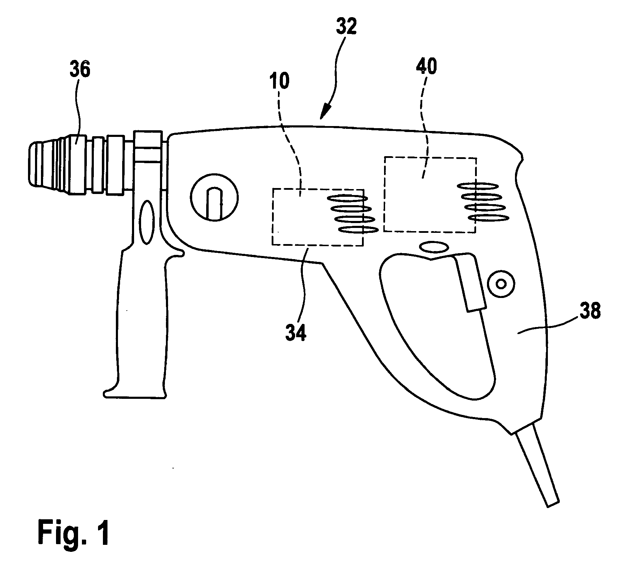

In Figur 1 ist eine von einem Bohrhammer gebildete Handwerkzeugmaschine 32 dargestellt. Die Handwerkzeugmaschine 32 umfasst ein Gehäuse 34 und in einem Frontbereich eine Werkzeugaufnahme 36 zu einer Aufnahme eines Werkzeugs. An einer dem Frontbereich abgewandten Seite umfasst die Handwerkzeugmaschine 32 einen Haupthandgriff 38 zu einem Betätigen der Handwerkzeugmaschine 32 und zu einer Kraftübertragung von einem Bediener auf die Handwerkzeugmaschine 32.

Zu einer Erzeugung eines Antriebsmoments weist die Handwerkzeugmaschine 32 eine Antriebseinheit 40 auf. Das Antriebsmoment der Antriebseinheit 40 wird über eine Zwischenwelle der Handwerkzeugmaschine 32 an ein nicht näher dargestelltes pneumatisches Schlagwerk und/oder an ein rotierendes, von einem Hammerrohr 42 gebildetes Abtriebsmittel 12 übertragen.

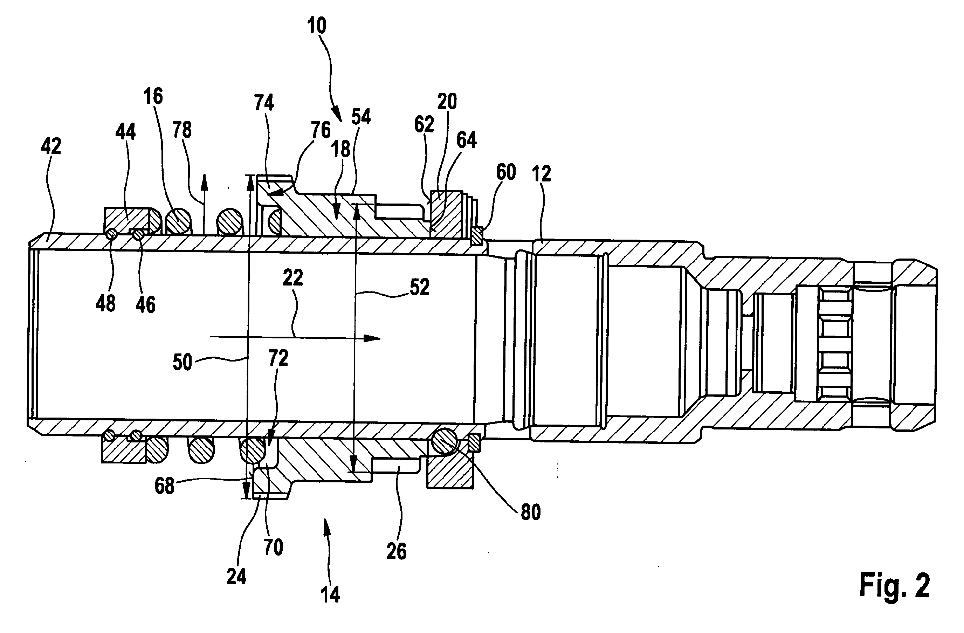

In Figur 2 ist ein Teilbereich der Handwerkzeugmaschine 32 mit einer Getriebevorrichtung 10 dargestellt. Die Getriebevorrichtung 10 weist eine Überlastkupplung 14 auf, die auf dem Hammerrohr 42 angeordnet ist. Die Überlastkupplung 14 umfasst eine von einem Sinterbauteil gebildete Zahnradeinheit 18, ein von einer Schraubenfeder gebildetes Federelement 16 und ein Rastelement 20. Entlang einer Kraftflussrichtung 22 des Hammerrohrs 42 sind das Federelement 16 vor der Zahnradeinheit 18 und die Zahnradeinheit 18 vor dem Rastelement 20 auf dem Hammerrohr 42 angeordnet. Zu einer Abstützung des Federelements 16 ist entlang der Kraftflussrichtung 22 vor dem Federelement 16 ein als Stützring ausgebildetes Stützelement 44 angeordnet, das in Kraftflussrichtung 22 mittels zweier Sprengringe 46, 48 fest auf dem Hammerrohr 42 angeordnet ist (Figur 2). Grundsätzlich ist es jedoch auch denkbar, das Stützelement 44 oder auch das Federelement 16 direkt in Kraftflussrichtung 22 fest mit dem Hammerrohr 42 zu befestigen.

Zu einer Abstützung des Federelements 16 an der Zahnradeinheit 18 ist die Zahnradeinheit 18 an einer dem Federelement 16 zugewandten Seite 68 stufenartig ausgebildet. Eine stufenartig ausgebildete Aussparung 70 zu einer Aufnahme des Federelements 16 erstreckt sich dabei in Kraftflussrichtung 22 an einem radial nach innen gerichteten Teilbereich 72 der Zahnradeinheit 18. Eine stufenartig ausgebildete Überdeckung 74 ist an einem radial nach außen gerichteten Teilbereich 76 der Zahnradeinheit 18 angeordnet und überdeckt die Aussparung 70 entgegen der Kraftflussrichtung 22, so dass das Federelement 16 in radialer Richtung 78 an der Zahnradeinheit 18 gesichert ist.

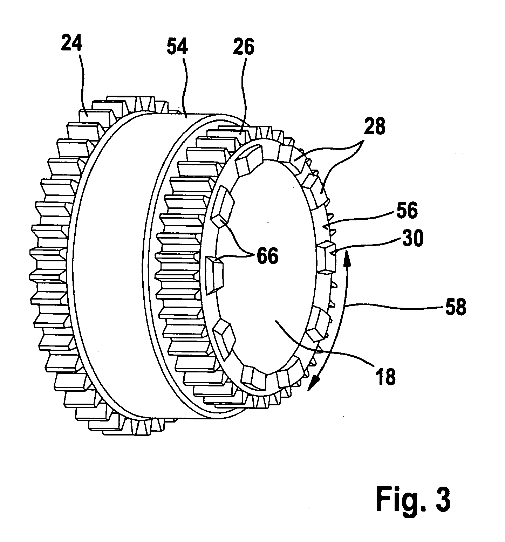

Die Zahnradeinheit 18 weist zwei Drehmomentübertragungsbereiche 24, 26 auf, die zu einer Übertragung unterschiedlicher Antriebsgeschwindigkeiten auf das Hammerrohr 42 vorgesehen sind. Die beiden Drehmomentübertragungsbereiche 24, 26 sind jeweils von einer Außenverzahnung gebildet, die zu einer Drehmomentübertragung mit einer dazu korrespondierenden Verzahnung eines nicht näher dargestellten Drehmomentübertragungsmittels der Getriebevorrichtung 10 koppelbar sind. Der erste Drehmomentübertragungsbereich 24 der Zahnradeinheit 18 weist einen Arbeitsradius 50 auf, der größer ist als ein Arbeitsradius 52 des zweiten Drehmomentübertragungsbereichs 26, so dass mittels der beiden Drehmomentübertragungsbereiche 24, 26 unterschiedliche Drehmomente bzw. unterschiedliche Antriebsgeschwindigkeiten des Hammerrohrs 42 bzw. eines drehfest mit dem Hammerrohr 42 verbundenen Werkzeugs im Betrieb der Handwerkzeugmaschine 32 bzw. der Getriebevorrichtung 10 realisiert werden können (Figur 2). Zwischen den beiden Drehmomentübertragungsbereichen 24, 26 ist zudem entlang der Kraftflussrichtung 22 ein Teilbereich 54 der Zahnradeinheit 18 angeordnet, der eine glatte, verzahnungslose Kontur aufweist (Figuren 2 und 3).

Zu einer Übertragung des Drehmoments auf das Hammerrohr 42 weist die Zahnradeinheit 18 mehrere Kraftübertragungselemente 28 der Überlastkupplung 14 auf (Figur 3). Die Kraftübertragungselemente 28 sind zu einer Kopplung mit dem Rastelement 20 der Überlastkupplung 14 vorgesehen und sind an einer in Kraftflussrichtung 22 gerichteten Oberfläche 56 der Zahnradeinheit 18 angeordnet. Die Zahnradeinheit 18 und die Kraftübertragungselemente 28 sind dabei einstückig ausgebildet. Die Kraftübertragungselemente 28 weisen ein trapezartiges Stirnprofil 30 auf und sind in einer Umfangsrichtung 58 der Zahnradeinheit 18 gleichmäßig beabstandet zueinander angeordnet. Des Weiteren erstrecken sich die Kraftübertragungselemente 28 in Kraftflussrichtung 22 fortsatzartig an der Zahnradeinheit 18 (Figur 3).

Zur Übertragung des Drehmoments von der Zahnradeinheit 18 über das Rastelement 20 auf das Hammerrohr 42 ist das Rastelement 20 mittels einer Kugel 80 drehfest und mittels eines Sprengrings 60 entlang der Kraftflussrichtung 22 fest auf dem Hammerrohr 42 angeordnet (Figur 2). Zudem weist das Rastelement 20 an einer der Zahnradeinheit 18 zugewandten Seite 62 eine zu der Zahnradeinheit 18 bzw. zu den Kraftübertragungselementen 28 der Zahnradeinheit 18 korrespondierende, hier nicht näher dargestellte Übertragungskontur auf.

Im Betrieb der Handwerkzeugmaschine 32 bzw. der Getriebevorrichtung 10 wird mittels des Federelements 16 eine Kopplung zwischen der Zahnradeinheit 18 bzw. den Kraftübertragungselementen 28 und dem Rastelement 20 hervorgerufen. Ein maximal übertragbares Drehmoment der Handwerkzeugmaschine 32 über ein in der Werkzeugaufnahme 36 befindliches Werkzeug auf ein zu bearbeitendes Objekt ergibt sich aus einem Zusammenwirken einer Federkraft des Federelements 16 und einer Ausgestaltung der Kraftübertragungselemente 28. Die an einer dem Rastelement 20 zugewandten Seite 64 der Zahnradeinheit 18 angeordneten Kraftübertragungselemente 28 weisen eine in Umfangsrichtung 58 angeordnete Übertragungsflanke 66 auf, die einen stufenartigen Übergang zwischen dem trapezartigem Stirnprofil 30 eines Kraftübertragungselements 28 und der dem Rastelement 20 zugewandten Seite 64 der Zahnradeinheit 18 bildet. Die Übertragungsflanke 66 der Kraftübertragungselemente 28 weist eine Schräge auf, die im Zusammenwirken mit der Federkraft des Federelements 16 ein maximal zu übertragendes Drehmoment festlegt.

Ist das zu übertragende Drehmoment im Betrieb der Handwerkzeugmaschine 32 bzw. der Getriebevorrichtung 10 kleiner als ein mittels der Überlastkupplung 14 maximal übertragbares Drehmoment, ist die Zahnradeinheit 18 mittels der Kraftübertragungselemente 28 über das Rastelement 20 drehfest mit dem Hammerrohr 42 verbunden. Übersteigt das zur Drehung des Werkzeugs erforderliche Drehmoment das maximal übertragbare Drehmoment, wird mittels der Überlastkupplung 14 eine Unterbrechung der Drehmomentübertragung hervorgerufen. Dabei wird die Zahnradeinheit 18 gegen die Federkraft des Federelements 16 entgegen der Kraftflussrichtung 22 auf dem Hammerrohr 42 verschoben und die Kraftübertragungselemente 28 werden aus der Übertragungskontur des Rastelements 20 gedrückt. Eine Drehmomentübertragung von der Zahnradeinheit 18 auf das Rastelement 22 und damit auf das Hammerrohr 42 ist aufgehoben.

## Patentansprüche

1. Getriebevorrichtung, insbesondere für einen Bohr- und/oder Meißelhammer, mit einem Abtriebsmittel (12) und einer auf dem Abtriebsmittel (12) angeordneten Überlastkupplung (14), die ein Federelement (16), eine Zahnradeinheit (18) und ein Rastelement (20) aufweist, wobei das Federelement (16) entlang einer Kraftflussrichtung (22) des Abtriebsmittels (12) auf dem Abtriebsmittel (12) vor der Zahnradeinheit (18) und dem Rastelement (20) angeordnet ist und die Zahnradeinheit (18) entlang der Kraftflussrichtung (22) des Abtriebsmittels (12) auf dem Abtriebsmittel (12) vor dem Rastelement (20) angeordnet ist, wobei die Zahnradeinheit (18) zumindest ein Kraftübertragungselement (28) aufweist, das zu einer Kopplung an das Rastelement (20) vorgesehen ist, **dadurch gekennzeichnet, dass** das Kraftübertragungselement (28) ein trapezartiges Stirnprofil (30) aufweist.

2. Getriebevorrichtung nach einem der vorhergehenden Ansprüche, **dadurch gekennzeichnet, dass** die Zahnradeinheit (18) zumindest zwei Drehmomentübertragungsbereiche (24, 26) zu einer Übertragung unterschiedlicher Antriebsgeschwindigkeiten auf das Abtriebsmittel (12) aufweist.

3. Getriebevorrichtung nach Anspruch 1, **dadurch gekennzeichnet, dass** die Zahnradeinheit (18) und das Kraftübertragungselement (28) zumindest teilweise einstückig ausgebildet sind.

4. Getriebevorrichtung nach einem der vorhergehenden Ansprüche, **dadurch gekennzeichnet, dass** das Rastelement (20) drehfest mit dem Abtriebsmittel (12) verbunden ist.

5. Getriebevorrichtung nach einem der vorhergehenden Ansprüche, **dadurch gekennzeichnet, dass** die Zahnradeinheit (18) von einem Sinterbauteil gebildet ist.

6. Handwerkzeugmaschine mit einer Getriebevorrichtung (10) nach einem der vorhergehenden Ansprüche.

## Claims

1. Gearbox device, in particular for a hammer drill and/or chisel hammer, with an output means (12) and an overload clutch (14) which is arranged on the output means (12) and has a spring element (16), a gearwheel unit (18) and a latching element (20), wherein the spring element (16) is arranged on the output means (12) upstream of the gearwheel unit (18) and the latching element (20) in a force flux direction (22) of the output means (12), and the gearwheel unit (18) is arranged on the output means (12) upstream of the latching element (20) in the force flux direction (22) of the output means (12), wherein the gearwheel unit (18) has at least one force transmission element (28) which is provided for coupling to the latching element (20), **characterized in that** the force transmission element (28) has a trapezoidal end profile (30).

2. Gearbox device according to Claim 1, **characterized in that** the gearwheel unit (18) has at least two torque transmission regions (24, 26) for transmitting different driving speeds to the output means (12).

3. Gearbox device according to Claim 1, **characterized in that** the gearwheel unit (18) and the force transmission element (28) are at least partially formed integrally.

4. Gearbox device according to one of the preceding claims, **characterized in that** the latching element (20) is connected to the output means (12) for conjoint rotation.

5. Gearbox device according to one of the preceding claims, **characterized in that** the gearwheel unit (18) is formed by a sintered component.

6. Hand-held power tool with a gearbox device (10) according to one of the preceding claims.

## Revendications

1. Dispositif de transmission, en particulier pour un marteau-perforateur et/ou un marteau-piqueur, comprenant un moyen de prise de force (12) et un embrayage de surcharge (14) disposé sur le moyen de prise de force (12), qui présente un élément de ressort (16), une unité de pignon (18) et un élément d'encliquetage (20), l'élément de ressort (16) étant disposé le long d'une direction de flux de force (22) du moyen de prise de force (12) sur le moyen de prise de force (12) avant l'unité de pignon (18) et l'élément d'encliquetage (20), et l'unité de pignon (18) étant disposée le long de la direction de flux de force (22) du moyen de prise de force (12) sur le moyen de prise de force (12) avant l'élément d'encliquetage (20), l'unité de pignon (18) présentant au moins un élément de transfert de force (28) qui est prévu pour s'accoupler à l'élément d'encliquetage (20), **caractérisé en ce que** l'élément de transfert de force (28) présente un profil frontal (30) de forme trapézoïdale.

2. Dispositif de transmission selon la revendication 1, **caractérisé en ce que** l'unité de pignon (18) présente au moins deux régions de transfert de couple (24, 26) pour produire un transfert de différentes vitesses d'entraînement au moyen de prise de force (12).

3. Dispositif de transmission selon la revendication 1, **caractérisé en ce que** l'unité de pignon (18) et l'élément de transfert de force (28) sont réalisés au moins en partie d'une seule pièce.

4. Dispositif de transmission selon l'une quelconque des revendications précédentes, **caractérisé en ce que** l'élément d'encliquetage (20) est connecté de manière solidaire en rotation au moyen de prise de force (12).

5. Dispositif de transmission selon l'une quelconque des revendications précédentes, **caractérisé en ce que** l'unité de pignon (18) est formée par un composant fritté.

6. Machine-outil à main comprenant un dispositif de transmission (10) selon l'une quelconque des revendications précédentes.
